## Europäisches Patentamt
## European Patent Office
## Office européen des brevets

(19)

(11) Veröffentlichungsnummer: **0 006 636**
**B1**

(12) **EUROPÄISCHE PATENTSCHRIFT**

(45) Veröffentlichungstag der Patentschrift:
07.10.81

(51) Int. Cl.³: **G 01 P 15/08**, G 01 V 1/18

(21) Anmeldenummer: 79102216.3

(22) Anmeldetag: 02.07.79

(54) Vorrichtung zum Messen von Beschleunigungen an schwingenden Körpern.

(30) Priorität: 05.07.78 DE 2829425

(43) Veröffentlichungstag der Anmeldung:
09.01.80 Patentblatt 80/1

(45) Bekanntmachung des Hinweises auf die Patenterteilung:
07.10.81 Patentblatt 81/40

(84) Benannte Vertragsstaaten:
CH FR GB NL

(56) Entgegenhaltungen:
DE-B-1 125 666
DE-C-942 663
US-A-2 987 669
US-A-3 582 874
US-A-3 593 258
AUTOMATIE, Vol. 13, Mai 1969,
Nr. 5
Baarn NL
«Veldplaten», Seiten 119-124
*Seite 119, Sapite 1, Zeile 1

Spalte 2, Zeile 22*

(73) Patentinhaber: **Deutsche Forschungs -und Versuchsanstalt für Luft-und Raumfahrt e.V., Linder Höhe, D-5000 Köln 90 (DE)**

(72) Erfinder: **Breitbach, Elmar, Dr.-Ing., Bornbreite 10, D-3400 Göttingen (DE)**

(74) Vertreter: **Bibrach, Rudolf, Dipl.-Ing. et al, Patentanwälte Dipl.-Ing. R. Bibrach Dipl.-Ing. E. Rehberg Postfach 7 38, D-3400 Göttingen (DE)**

## Vorrichtung zum Messen von Beschleunigungen an schwingenden Körpern

Die Erfindung bezieht sich auf eine Vorrichtung zum Messen von Beschleunigungen an schwingenden Körpern, wobei die Relativbewegung zwischen einer federnd aufgehängten seismischen Masse aus ferromagnetischem Material und dem zugehörigen, mit dem schwingenden Körper verbundenen Gehäuse in eine elektrische Messspannung umgesetzt wird, mit mindestens zwei magnetfeldabhängigen ohmschen Widerständen, insbesondere Feldplatten, und mit einem durch mindestens einen Permanentmagneten erzeugten, in seiner Stärke und Gestalt konstanten Magnetfeld im Luftspalt zwischen seismischer Masse und Gehäuse, wobei die Feldplatten durch das sie durchsetzende stationäre Magnetfeld vorgespannt und symmetrisch zur Nullage der seismischen Masse derart angeordnet sind, dass sich beim Eintreten der Relativbewegung mit der Verkleinerung des magnetischen Durchflusses der einen Feldplatte der magnetische Durchfluss der anderen Feldplatte vergrössert.

Eine derartige Vorrichtung ist aus der DE-B 12 85 774 bekannt, wobei jedoch vier induktionsabhängige Widerstände, beispielsweise Feldplatten, Verwendung finden. Diese Widerstände sind in einer Brückenschaltung zusammengefasst und werden von einer Gleichspannungsquelle versorgt. Trotz Verwendung von vier Feldplatten arbeitet das Messsystem nicht linear. Die seismische Masse muss als Permanentmagnet ausgebildet sein, wobei ungünstigerweise die gegenseitige Anordnung zwischen Permanentmagnet und Feldplatten so getroffen ist, dass sich an sich nur der Streufluss des magnetischen Feldes durch die Feldplatten erstreckt. Zudem ist der Permanentmagnet mit seiner Nord-Süd-Ausrichtung so relativ zu den Feldplatten angeordnet, dass eine Umlenkung des Flusses unter Streuwirkung erfolgen muss. Die Linearität der Messeinrichtung wird darüber hinaus auch insofern nachteilig beeinflusst, als die Anordnung keine hohe Vorspannung durch Erhöhung des stationären Magnetflusses erlaubt. Dies bedeutet, dass im nichtlinearen Bereich gearbeitet wird. Ausserdem ergeben sich Probleme in der Führung der als Permanentmagnet ausgebildeten seismischen Masse. Diese muss nämlich gleichabständig zwischen den jeweils gegenüber angeordneten Feldplatten bewegt werden, damit gleiche mechanische und elektrische Bedingungen herrschen.

Aus der Zeitschrift Automatie, Vol. 13, Mai 1969, Nr. 5 «Veldplaten», Seiten 119 bis 124 ist die Verwendung von Feldplatten zum elektrischen Messen nicht-elektrischer Grössen bekannt. Eine Feldplatte ist bekanntlich ein Helbleiterelement, dessen Widerstand unter dem Einfluss eines magnetischen Feldes stark zunimmt. Wenn einzelne Feldplatten im Spalt an einem Permanentmagneten bewegt werden, kann ein entsprechendes Signal abgenommen werden. Durch die Reihenschaltung oder die Parallelschaltung einzelner Feldplatten – auch innerhalb einer Netzschaltung – erhält man unterschiedliche Signale. Feldplatten können durch ein Magnetfeld vorgespannt werden, um bei steiler Kennlinie zu arbeiten, wenn der Luftspalt möglichst klein gemacht wird. Eine andere Möglichkeit der Vorspannung ist durch das Vormagnetisieren der Feldplatten gegeben.

Bei der Vorrichtung gemäss der GB-A 872 887 findet ein Permanentmagnet Anwendung, zwischen dessen Polschuhen eine Platte, beispielsweise eine Feldplatte, angeordnet ist. Seitlich von den Polschuhen ist an einer Membran ein Stück magnetisches Material aufgehängt, auf welches über einen Hebel die Bewegung übertragen wird. Nähert sich dieses Stück magnetischen Materials seitlich den Polschuhen, dann wird der magnetische Fluss durch die Feldplatte von dem magnetischen Material abgelenkt bzw. verändert. Damit wird aber mit der Bewegung der magnetische Kreis verändert. Zwar ist bei dieser Anordnung die Bewegungsrichtung der seismischen Masse senkrecht zu den Feldlinien des Magnetfeldes im Luftspalt; auch wird die Feldplatte senkrecht zu den Feldlinien des Magnetfeldes im Luftspalt angeordnet, jedoch arbeitet auch diese Vorrichtung nicht linear.

Gemäss der US-A 3 867 844 finden zwei Permanentmagnete Verwendung, von denen einer ortsfest angeordnet ist, während der andere die seismische Masse bildet, die nach Art eines Pendels aufgehängt ist. Auf dem ortsfesten Permanentmagneten ist ein Hall-Element angeordnet, dessen Abmessungen aber bereits grösser sind als die Abmessungen des beweglichen aufgehängten Permanentmagneten. Aufgrund dieser Dimensionierung ist eine solche Vorrichtung überhaupt nicht geeignet, kleine Wege anzuzeigen. Erst bei grösseren Ausschlägen, bei welchen tatsächlich die Grenzen des Hall-Elementes von der seismischen Masse überstrichen werden, sind Signale denkbar und abzunehmen. Es handelt sich also im Grunde eher um einen Grenzwertgeber denn um eine Vorrichtung zum Messen von Beschleunigungen.

Es ist die Aufgabe der Erfindung, eine Vorrichtung der eingangs beschriebenen Art derart weiterzubilden, dass die Vorrichtung eine wesentlich grössere Empfindlichkeit und ein praktisch lineares Messverhalten ergibt.

Erfindungsgemäss wird dies dadurch erreicht, dass die Feldplatten einerseits senkrecht zu den Feldlinien des Magnetfeldes im Luftspalt und andererseits mit ihrer Längsachse senkrecht zur Bewegungsrichtung der seismischen Masse angeordnet sind, und dass die Abmessung und die Anordnung der seismischen Masse auf die Abmessungen und die Anordnung der Feldplatten derart abgestimmt sind, dass sich auch bei Eintreten der Relativbewegung die Projektion der seismischen Masse auf die Feldplatten innerhalb der von diesen aufgespannten Fläche bewegt und sich mit der Durchflussverminderung der einen Feldplatte eine betragsmässig gleichgrosse Durchflussvergrösserung der anderen Feldplatte ergibt. Der besondere Vorteil des Anmeldungsgegenstandes ist darin zu sehen, dass die Vorrichtung extrem linear arbeitet, weil sie sowohl mechanisch als auch elektrisch linear aufgebaut ist. Die Linearität in mechanischer Hinsicht hat ihre Ursache darin, dass bei Eintritt einer Bewegung der seismischen Masse relativ zu ihrer Projektion auf die Feldplatten auf diesen jeweils eine konstante Fläche überstrichen wird, so dass die Durchflussänderung an den Feldplatten proportional zur Bewegung der seismischen Masse ist. Die elektrische Linearität wird dadurch erreicht, dass die Feldplatten infolge ihrer hohen Vorspannung in nahezu linearen Bereichen der Kennlinie benutzt werden.

Da die Feldplatten durch das sie durchsetzende stationäre Magnetfeld vorgespannt sind, wird im Bereich einer steileren Kennlinie gearbeitet, was eine höhere Empfindlichkeit ergibt. Zur Erhöhung dieser Vorspannung des stationären Magnetfeldes kann das Magnetfeld durch Weicheisenteile auf die Feldplatten fokussiert sein. Auch hierdurch wird die Empfindlichkeit gesteigert.

In einer ersten Ausführungsform kann das stationäre Magnetfeld durch einen gehäuseseitig gelagerten Permanentmagneten gebildet sein, während die seismische Masse senkrecht zu der Polachse des Permanentmagneten schwingend angeordnet ist, wobei die Feldplatten im Luftspalt an dem Permanentmagneten angeordnet sind. Dies gestattet eine sehr kleine Bauweise.

In einer besonderen Ausführungsform kann die seismische Masse aus einem Weicheisenteil bestehen, welches zwischen den anderen Weicheisenteilen schwingend angeordnet ist, wobei in den beiden Luftspalten jeweils zwei Feldplatten angeordnet sind. Durch diese Verdoppelung in der Anordnung wird ebenfalls die Empfindlichkeit gesteigert. Es versteht sich, dass sich dieses Prinzip auch ausdehnen lässt und somit eine Mehrfach- oder Kaskadenanordnung realisierbar ist.

In einer weiteren Ausführungsform kann die seismische Masse als Permanentmagnet ausgebildet sein, während die Weicheisenteile gehäuseseitig angeordnet sind. Bei allen diesen Ausführungsformen kommt es immer darauf an, ein in seiner Stärke und Gestalt konstantes Magnetfeld zu errichten, dieses Magnetfeld beschleunigungsabhängig zu stören und die Änderung des Magnetfeldes zu messen.

In der beiliegenden Zeichnung werden verschiedene Vorrichtungen dargestellt und im folgenden näher beschrieben. Es zeigen:

Fig. 1 einen Querschnitt durch eine Vorrichtung in einer ersten Ausführungform,

Fig. 2 einen Schnitt gemäss der Linie II–II in Fig. 1,

Fig. 3 einen Schnitt gemäss der Linie III–III in Fig. 1,

Fig. 4 einen Schnitt durch die Vorrichtung in einer zweiten Ausführungsform,

Fig. 5 einen Schnitt gemäss der Linie V–V in Fig. 4,

Fig. 6 einen Schnitt gemäss der Linie VI–VI in Fig. 5,

Fig. 7 einen Schnitt durch eine Vorrichtung in einer dritten Ausführungsform,

Fig. 8 einen Schnitt gemäss der Linie VIII–VIII in Fig. 7 und

Fig. 9 einen Schnitt gemäss der Linie IX–IX in Fig. 7.

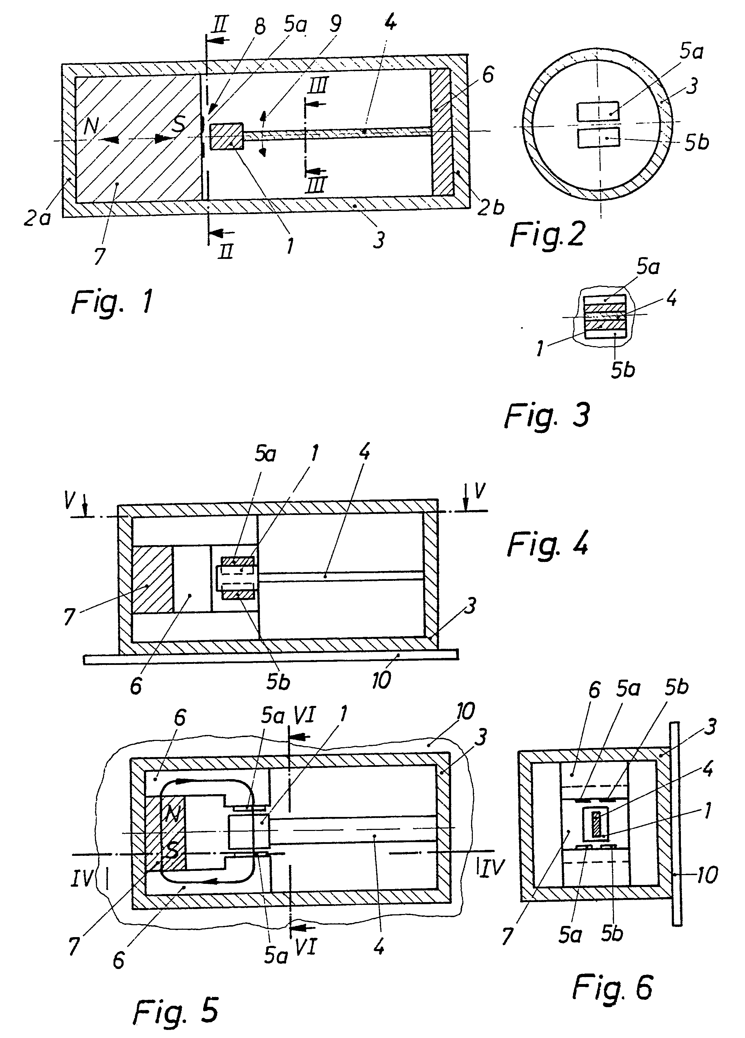

Die anhand der Fig. 1 bis 3 dargestellte erste Ausführungsform besitzt eine seimische Masse 1, die über eine Blattfeder 4 federnd an einem Gehäuse 3 aufgehängt bzw. gelagert ist. Das Gehäuse 3 besitzt Stirnseiten 2a und 2b und ist ansonsten nach Art eines Zylindermantels ausgebildet. Im Bereich des an die Stirnseite 2a anschliessenden Endes des Gehäuses 3 ist ein Permanentmagnet 7 ortsfest gelagert, der in einem der seismischen Masse 1 zugekehrten Luftspalt 8 Feldplatten 5a und 5b trägt. Die seismische Masse 1 kann aus Weicheisen bestehen, ebenso wie ein Weicheisenteil 6, welches benachbart zu der Stirnseite 2b angeordnet ist. Ein Ausschlag der seismischen Masse 1 bei Einfluss einer Beschleunigung äussert sich in einer Relativbewegung zu dem Permanentmagneten 7 in Richtung des Pfeiles 9. Wesentlich ist die Anordnung der Feldplatten 5a und 5b relativ zu der geometrischen Gestalt der seismischen Masse 1, wie dies insbesondere in der Projektion der Teile übereinander gemäss Fig. 3 ersichtlich ist. Bei den Feldplatten 5a, 5b handelt es sich um magnetfeldabhängige ohmsche Widerstände, also um Einrichtungen, die beim Einwirken eines veränderlichen Magnetfeldes ihren Widerstand ändern. Da Feldplatten aber an sich bekannt sind, kann auf deren weitere Beschreibung und auch auf die Umformung der Widerstandsänderung in eine entsprechende elektrische Messspannung verzichtet werden. Insbesondere aus Fig. 3 ist aber erkennbar, dass die eine Platte 5a bei Relativbewegung der seismischen Masse 1 von einem grösseren Magnetfeld beaufschlagt wird, während gleichzeitig die andere Feldplatte 5b durch ein kleineres Magnetfeld beaufschlagt wird und umgekehrt.

Bei dem in den Fig. 4 bis 6 dargestellten zweiten Ausführungsbeispiel ist der Magnetfluss durch die Anordnung von zusätzlichen Weicheisenteilen 6 geführt bzw. fokussiert. Das Gehäuse 3 der Vorrichtung ist auf einem schwingenden Körper 10 befestigt. Gehäuseseitig ist der Permanentmagnet 7 gelagert, ebenso die Weicheisenteile 6. Vier Feldplatten 5a, 5b sind in der ersichtlichen Weise angeordnet. Auch die seismische Masse 1 besteht wiederum aus einem Weicheisenteil und ist an der Feder 4 im Luftspalt zwischen zwei Weicheisenteilen 6 schwingbar gelagert. Durch die stärkere Führung des Magnetfeldes mit Hilfe der Weicheisenteile 6 werden die Feldplatten 5a, 5b stärker vorgespannt, d.h. es wird ein Arbeiten in einem steileren Kurvenabschnitt der Kennlinie ermöglicht, so dass die Empfindlichkeit gesteigert wird.

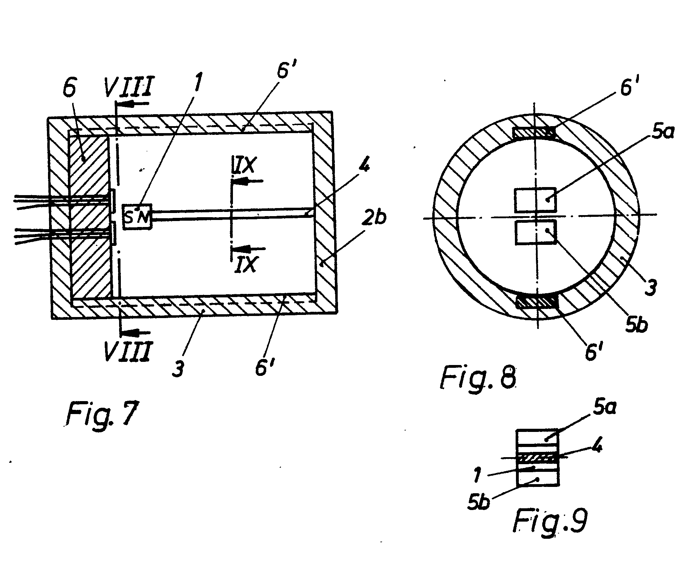

Die Fig. 7 bis 9 zeigen eine dritte Ausführungsform. Hier ist die seismische Masse 1 als Permanentmagnet ausgebildet und an der Feder 4 aufgehängt. Es wird also das Magnetfeld bewegt. Im Bereich eines Weicheisenteiles 6 sind die beiden Feldplatten 5a und 5b ortsfest gelagert, und zwar exakt mit den Abmessungen und der relativen Lage, wie dies insbesondere aus Fig. 9 hervorgeht. In das Gehäuse 3 können weitere Weicheisenteile 6′ eingelegt sein, um den Magnetfluss besser zu führen.

**Patentansprüche**

1. Vorrichtung zum Messen von Beschleunigungen an schwingenden Körpern (10), wobei die Relativbewegung zwischen einer federnd aufgehängten seismischen Masse (1) aus ferromagnetischem Material und dem zugehörigen, mit dem schwingenden Körper (10) verbundenen Gehäuse (3) in eine elektrische Messspannung umgesetzt wird, mit mindestens zwei magnetfeldabhängigen ohmschen Widerständen, insbesondere Feldplatten (5a, 5b), und mit einem durch mindestens einen Permanentmagneten erzeugten, in seiner Stärke und Gestalt konstanten Magnetfeld im Luftspalt (8) zwischen seismischer Masse (1) und Gehäuse (3), wobei die Feldplatten (5a, 5b) durch das sie durchsetzende stationäre Magnetfeld vorgespannt und symmetrisch zur Nullage der seismischen Masse (1) derart angeordnet sind, dass sich bei Eintreten der Relativbewegung mit der Verkleinerung des magnetischen Durchflusses der einen Feldplatte der magnetische Durchfluss der anderen Feldplatte vergrössert, dadurch gekennzeichnet, dass die Feldplatten (5a, 5b) einerseits senkrecht zu den Feldlinien des Magnetfeldes im Luftspalt (8) und andererseits mit ihrer Längsachse senkrecht zur Bewegungsrichtung der seismischen Masse (1) angeordnet sind, und dass die Abmessung und die Anordnung der seismischen Masse (1) auf die Abmessungen und die Anordnung der Feldplatten (5a, 5b) derart abgestimmt sind, dass sich auch bei Eintreten der Relativbewegung die Projektion der seismischen Masse (1) auf die Feldplatten (5a, 5b) innerhalb der von diesen aufgespannten Flächen bewegt und sich mit der Durchflussverminderung der einen Feldplatte eine betragsmässig gleichgrosse Durchflussvergrösserung der anderen Feldplatte ergibt.

2. Vorrichtung nach Anspruch 1, dadurch gekennzeichnet, dass zur Erhöhung der Vorspannung des stationären Magnetfeldes das Magnetfeld durch Weicheisenteile (6) auf die Feldplatten (5a, 5b) fokussiert ist.

3. Vorrichtung nach Anspruch 1 oder 2, dadurch gekennzeichnet, dass das stationäre Magnetfeld durch einen gehäuseseitig gelagerten Permanentmagneten (7) gebildet ist und die seismische Masse (1) senkrecht zu der Polachse des Permanentmagneten (7) schwingend angeordnet ist, wobei die Feldplatten (5a, 5b) im Luftspalt (8) an dem Permanentmagneten (7) angeordnet sind.

4. Vorrichtung nach Anspruch 1 oder 2, dadurch gekennzeichnet, dass die seismische Masse (1) aus einem Weicheisenteil besteht, welches zwischen den anderen Weicheisenteilen (6 in Fig. 4 bis 6) schwingend angeordnet ist, und dass in den beiden Luftspalten jeweils zwei Feldplatten (5a, 5b) angeordnet sind.

5. Vorrichtung nach Anspruch 1 oder 2, dadurch gekennzeichnet, dass die seismische Masse (1) als Permanentmagnet ausgebildet ist und die Weicheisenteile (6, 6′ in Fig. 7 bis 9) gehäuseseitig angeordnet sind.

**Revendications**

1. Dispositif de mesure d'accélérations sur des corps oscillants (10) dans lequel le mouvement relatif entre une masse sismique (1) en matériau ferromagnétique suspendue élastiquement, et le boîtier correspondant (3) relié au corps oscillant (10), est transposé en tension électrique de mesure, avec au moins deux résistances ohmiques qui sont fonction du champ magnétique, en particulier des plaques de champs (5a, 5b), et avec un champ magnétique, engendré par au moins un aimant permanent, constant en intensité et dans sa forme dans l'entrefer (8) entre la masse sismique (1) et le boîtier (3), les plaques de champ (5a, 5b) étant polarisées par le champ magnétique stationnaire qui les traverse et disposées de telle façon, symétriquement à la position zéro de la masse sismique (1), que lorsque le déplacement relatif se produit, la diminution de flux magnétique sur une des plaques de champ entraîne une augmentation de même valeur du flux magnétique sur l'autre plaque de champ, caractérisé en ce que les plaques de champ (5a, 5b) sont disposées, d'une part perpendiculairement aux lignes de champ du champ magnétique dans l'entrefer (8), et d'autre part perpendiculairement par leur axe longitudinal au sens de déplacement de la masse sismique (1), et que les dimensions et la disposition de la masse sismique (1) sont accordées de telle façon, avec les dimensions et la disposition des plaques de champ (5a, 5b), que lorsque le mouvement relatif se produit, la projection de la masse sismique (1) sur les plaques de champ (5a, 5b) se déplace sur des surfaces sous-tendues par celles-ci, et qu'une diminution du flux sur l'une des plaques de champ (5a, 5b) entraîne une augmentation de même valeur sur l'autre plaque de champ.

2. Dispositif selon la revendication 1, caractérisé en ce que pour augmenter la polarisation du champ magnétique stationnaire, le champ magnétique est focalisé par des pièces en fer doux (6) sur les plaques de champ (5a, 5b).

3. Dispositif selon l'une des revendications 1 et 2, caractérisé en ce que le champ magnétique stationnaire est formé par un aimant permanent (7) logé dans le boîtier et que la masse sismique (1) est placée, de façon à pouvoir osciller, perpendiculairement à l'axe des pôles de l'aimant permanent (7), les plaques de champ (5a, 5b) étant disposées dans l'entrefer (8) sur l'aimant permanent (7).

4. Dispositif selon l'une des revendications 1 et 2, caractérisé en ce que la masse sismique (1) est constituée par une pièce en fer doux qui peut osciller entre les autres pièces en fer doux (6 sur les figures 4 à 6), et que dans les deux entrefers sont disposées à chaque fois deux plaques de champ (5a, 5b).

5. Dispositif selon l'une des revendications 1 et 2, caractérisé en ce que la masse sismique (1) est constituée en aimant permanent et que les pièces en fer doux (6, 6′ sur les figures 7 à 9) sont placées côté boîtier.

## Claims

1. Device for measuring accelerations on vibrating bodies (10), in which the relative motion between a resiliently suspended seismic mass (1), made of a ferromagnetic material, and the associated housing (3), which is connected to the vibrating body (10), is converted into an electric measurement voltage, by means of at least two ohmic resistances which are dependent on the magnetic field, in particular magnetoresistors (5a, 5b), and by means of a magnetic field in the air gap (8) between the seismic mass (1) and the housing (3), this magnetic field being generated by means of at least one permanent magnet and being constant in its intensity and configuration, the magnetoresistors (5a, 5b) being prestressed by the stationary magnetic field which permeates them and being arranged symmetrically with respect to the zero position of the seismic mass (1), in such a manner that, when the relative motion occurs and the magnetic flux through one magnetoresistor is reduced, the magnetic flux through the other magnetoresistor is increased, characterised in that the magnetoresistors (5a, 5b) are arranged, on the one hand, perpendicularly to the lines of flux of the magnetic field in the air gap (8) and, on the other hand, with their longitudinal axes perpendicular to the direction of motion of the seismic mass (1), and in that the size and the arrangement of the seismic mass (1) is matched to the dimensions and the arrangement of the magnetoresistors (5a, 5b), in such a manner that, even when the relative motion occurs, the projection of the seismic mass (1), onto the magnetoresistors (5a, 5b), moves within the areas onto which these magnetoresistors are attached, resulting in a reduction in the magnetic flux passing through one magnetoresistor equal in magnitude to the increase in the magnetic flux passing through the other magnetoresistor.

2. Device according to Claim 1, characterised in that the magnetic field is focussed onto the magnetoresistors (5a, 5b) by means of soft iron parts (6), in order to increase the prestressing by means of the stationary magnetic field.

3. Device according to Claim 1 or 2, characterised in that the stationary magnetic field is formed by means of a permanent magnet (7) which is mounted in contact with the housing, and the seismic mass (1) is arranged so that it can vibrate perpendicularly to the polar axis of the permanent magnet (7), the magnetoresistors (5a, 5b) being located on the permanent magnet (7), in the air gap (8).

4. Device according to Claim 1 or 2, characterised in that the seismic mass (1) consists of a soft iron part, which is arranged, in a manner permitting vibration, between the other soft iron parts (6 in Figures 4 to 6), and in that two magnetoresistors (5a, 5b) are located, in each case, in the two air gaps.

5. Device according to Claim 1 or 2, characterised in that the seismic mass (1) is designed as a permanent magnet, and the soft iron parts (6, 6′ in Figures 7 to 9) are located in contact with the housing.

0 006 636

Fig. 1

Fig.2

Fig. 3

Fig. 4

Fig. 5

Fig. 6

Fig. 7

Fig. 8

Fig. 9